# EUROPEAN PATENT APPLICATION

(11) **EP 4 328 716 A1**
(43) Date of publication of application: **28.02.2024**
(21) Application number: 23805835.8
(22) Date of filing: 24.05.2023
(51) Int. Cl.: G06F 3/02, G06F 3/0362

(54) **SINGLE-HAND INPUT DEVICE**

(30) Priority: 08.06.2022 JP 2022093304
(71) Applicant: Moimate Inc., Chigasaki-shi, Kanagawa2530021 (JP)
(72) Inventor: JIMBO, Takayuki, Chigasaki-shi Kanagawa 2530021 (JP); KOIKE, Toshiki, Chigasaki-shi Kanagawa 2530021 (JP)
(74) Representative: Gille Hrabal Partnerschaftsgesellschaft mbB Patentanwälte
(86) International application number: PCT/JP2023/019247
(87) International publication number: WO 2023/238659

(57) **Abstract**

[Summary]

[Problem] To provide a one-handed input device capable of further improving work efficiency in video editing.

[Solution] One-handed input device 1 of the present invention comprises circuit substrate 41, a plurality of key tops 20 that are positioned above circuit substrate 41, which can be freely pressed down, and jog dial 30, which is positioned above circuit substrate 41, being freely rotatable, wherein jog dial 30 is capable of rotary operation by contacting an inner surface of a finger with an upper surface thereof, and a predetermined number of key tops 20 among the key tops 20 being operable by a middle, ring, or little finger while maintaining an index finger in contact with an upper face of jog dial 30.

## Description

### Technical Field

This invention relates to a one-handed input device.

### Background Art

In recent years, an increasing number of people are not only creating their own videos but are also submitting them to video streaming services to ensure that the created video is seen by a wider audience. Together with this, a growing number of people are doing their own video editing. In video editing, video editing software is used to combine videos, delete unnecessary parts, and add music and subtitles.

In video editing tasks, the operator uses one hand (e.g., the right hand) to operate the mouse or liquid crystal tablet and the other hand (e.g., the left hand) to operate the keyboard. In addition, video editing software usually enables customizing keyboard shortcuts on input devices to make editing work more efficient. As users become accustomed to editing, they want a work environment that promotes reduced editing time. For example, they might purchase input devices with dial-type control elements so that screen magnification/reduction, frame-by-frame movement of moving images, and the like, can be performed by dial operation, and a multifunction mouse, the functions of which correspond to keyboard key operations.

As an input device that has a dial and can be operated with one hand (e.g., the left hand), the technology described in Patent Literature 1 has been conventionally proposed. Patent Literature 1 describes an input device that can be operated with one hand having a pointing device, a jog dial, and switches.

### Citation List

### Patent Literature

[Patent Literature 1] JP2006-2442752A

### Summary of the Invention

### Problems to be Solved by the Invention

When a person edits a video using video editing software, the use of a left-handed input device to operate the jog dial and keys makes it possible to quickly call up multiple frequently used functions, quickly change continuous values, such as the playback position, magnification rate, and the like, to a large extent, change such values finely and accurately, and be used in combination with the operation of a right-handed mouse or a pen for a liquid crystal tablet.

For left-handed input devices, there is a further desire to operate them without changing the position of the left hand to the extent possible. The emergence of such left-handed input devices is expected to reduce the effort required by workers to operate an input device. In addition, since the position of the left hand does not change, the operator can easily operate the device without looking at the left-handed input device, the so-called blind touch, which further improves work efficiency in video editing.

The present invention responds to the above-mentioned requirements, and its purpose is to respond to these requirements and provide a one-handed input device that can further improve work efficiency in video editing.

### Means for Solving the Problems

To achieve the aforementioned purpose, the present invention has the configuration described below.
(1) A one-handed input device comprising:
   a substrate (e.g., circuit board 41) having a plurality of switch elements and a rotation detecting element that generates signals based on a rotation angle of a rotation axis;
   a plurality of key tops (e.g., key tops 20) positioned above the substrate and freely pressed toward the plurality of switch elements; and
   a jog dial (e.g., jog dial 30) positioned above the substrate that rotates the rotation axis,
   wherein the jog dial is capable of rotary operation by contacting an inner surface of a finger with an upper surface thereof;
   a predetermined number of key tops among the plurality of key tops being operable by a middle, ring, or little finger while maintaining an index finger in contact with an upper face of the jog dial and being positioned so as to enable a rotary operation of the jog dial by an index finger while maintaining a pressed state with a middle, ring, or little finger.

   According to (1), fingers can be placed on the desired key tops and the jog dial with one hand. This makes it possible to operate keys without looking at the hand operating the one-handed input device, to alternate between the jog dial and keys, or to operate the jog dial while pressing a key. This allows operations such as specifying an area and zooming in and out of the screen in video editing to be easily performed with one hand, further improving work efficiency.
(2) In the one-handed input device of (1), wherein each time it is rotated by a predetermined angle, the jog dial performs at least one of generating a mechanical sound or changing a rotational load.
   According to (2), it is possible to hear a mechanical sound and feel a clicking sensation due to a change in rotational load while rotating the jog dial, and it is possible to rotate the jog dial at a predetermined angle. This makes it possible to easily perform operations such as moving images back and forth a few frames at a time in video editing, for example, and facilitates editing operations that require minute manipulations.
(3) In the one-handed input device of (1) or (2), wherein a height from a board surface of the substrate to an upper surface of the predetermined number of key tops is substantially the same as a height from a board surface of the substrate to an upper surface of the jog dial.
   According to (3), the top surface of a predetermined number of key tops and the top surface of the jog dial are at substantially the same height with respect to the board surface, making it possible to place the index finger on the top surface of the jog dial and the middle finger, ring finger, and little finger on the top surface of the key tops without discomfort. This makes it easy to operate keys and the jog dial without having to look at the hand operating the one-handed input device, further improving work efficiency in video editing.
(4) In the one-handed input device of any one of (1) to (3), wherein a knob (e.g., first knob 31, second knob 32) is positioned on a side opposite to where the predetermined number of key tops are located with respect to the jog dial and can be operated by a thumb and an index finger.
   According to (4), the knob is placed near the index finger, making it easier to hold the knob with the thumb and index finger. This makes it possible to add further functions using knob rotation, such as adjusting the volume of music, to further improve work efficiency in video editing.
(5) In the one-handed input device of any one of (1) to (4), wherein the predetermined number of key tops is positioned so as to be capable of operation by one of a middle, ring, or little finger of a left hand, with an index finger of a left hand in contact with the jog dial.
(6) In the one-handed input device of any one of (1) to (4), wherein the predetermined number of key tops is positioned so as to be capable of operation by one of a middle, ring, or little finger of a right hand, with an index finger of a right hand in contact with the jog dial.

### Effect of the Invention

According to the present invention, it is possible to provide a one-handed input device that can further improve work efficiency in video editing.

### Brief Description of Drawings

[Fig. 1] This is an explanatory diagram showing image editing device 100 using one-handed input device 1 in an embodiment of the present invention.
[Fig. 2] This is an oblique view showing the appearance of one-handed input device 1 in an embodiment of the present invention.
[Fig. 3] This is a plan view of one-handed input device 1 shown in Fig. 2.
[Fig. 4] This is a left-side view of one-handed input device 1 shown in Fig. 2.
[Fig. 5] This is a front view of one-handed input device 1 shown in Fig. 2.
[Fig. 6] This is an explanatory diagram showing an example of the functions associated with each of the key tops 20 of one-handed input device 1.
[Fig. 7] This is a drawing showing an example of a video editing screen.

### Modes for Carrying Out the Invention

The following is a detailed description of the embodiment of the present invention with reference to the drawings.

### [Configuration of image editing device 100]

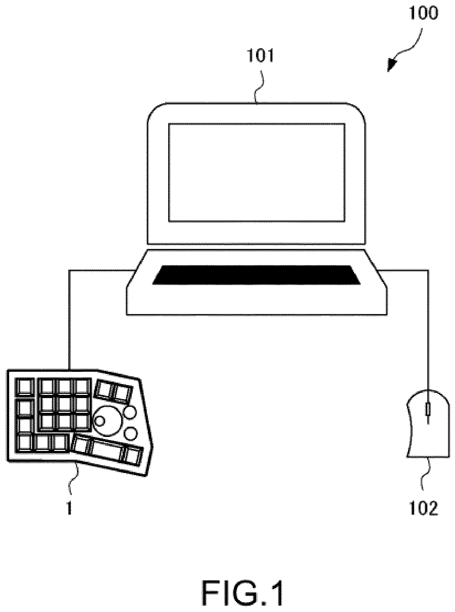

Fig. 1 is an explanatory drawing showing an image editing device 100 using one-handed input device 1 in an embodiment of the present invention.

Image editing device 100 comprises personal computer 101, personal computer 101, mouse 102, and one-handed input device 1. Mouse 102 and the one-handed input device 1 are wired or wirelessly connected to the personal computer 101.

Adobe's "Premiere Pro" video editing software, for example, is installed on personal computer 101, and by running this video editing software, personal computer 101 performs image editing functions. Then, the editing operator (hereinafter referred to simply as the operator) operates mouse 102 with the right hand and the one-handed input device 1 with the left hand to perform the video editing operation.

### [Configuration of one-handed input device 1]

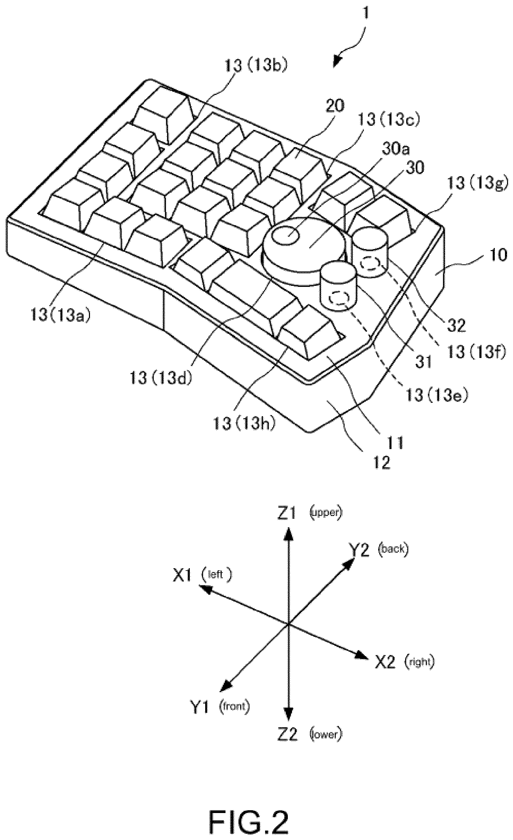

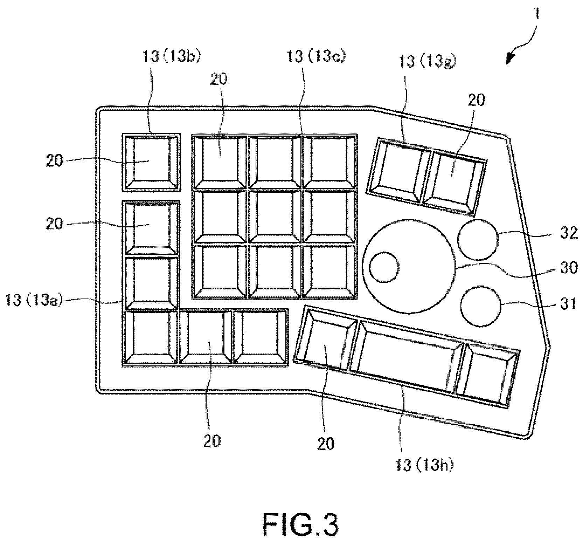

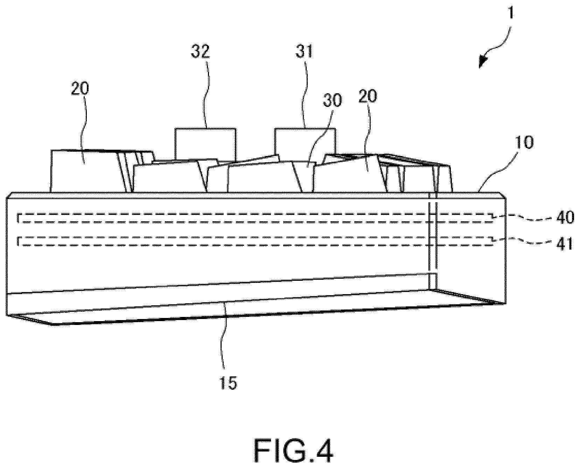

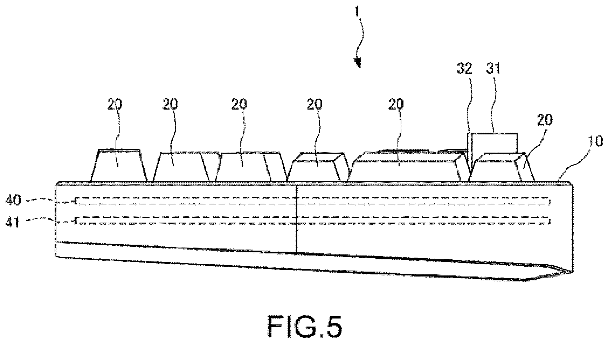

Fig. 2 is an oblique view showing the appearance of one-handed input device 1 in an embodiment of the present invention. Fig. 3 shows a plan view of one-handed input device 1 shown in Fig. 2. Fig. 4 shows a left-side view of one-handed input device 1 shown in Fig. 2. Fig. 5 shows a front view of one-handed input device 1 shown in Fig. 2.

As shown in Fig. 2, one-handed input device 1 comprises exterior case 10, a plurality of key tops 20, jog dial 30, first knob 31, and second knob 32. For the convenience of the explanation below, the X1 direction shown in Fig. 1 will be referred to as the left direction; the X2 direction, which is the opposite of the X1 direction, will be referred to as the right direction; the Y1 direction will be referred to as the front direction; the Y2 direction, which is the opposite of the Y1 direction, will be referred to as the back direction; the Z1 direction will be referred to as the upper direction; and the Z2 direction, which is the opposite of the Z1 direction, will be referred to as the lower direction.

Exterior case 10 is a case body comprising upper surface portion 11 and side surface portion 12 extending downward from the edge of upper surface portion 11, with the entire bottom portion open. Upper surface portion 11 has the shape of a "V" such that the right rear corner of the rectangle, whose longitudinal direction extends from left to right, is missing, and the right side area is inclined forward from the center. In other words, the left side of upper surface portion 11 is a trapezoidal shape comprising a rectangular center section cut diagonally, as shown in Fig. 2. In this trapezoidal shape, the front and back edges are parallel to each other, and the back edge is longer than the front edge. The right side of upper surface portion 11 is a shape in which the side right rear corner in a rectangle with one diagonal side of the trapezoidal shape in the left side area missing. The upper surface of upper surface portion 11 is formed into a "V" by joining the diagonal edge of the left side area with the left side of the right side area, which is the same length as this diagonal edge.

In addition, upper surface portion 11 has hole 13, in which the key tops 20, the jog dial 30, and the rotary axis into which the first knob 31 and the second knob 32 are fixed are freely inserted. Specifically, an L-shaped hole 13a is formed in the forward corner of the left side area of upper surface portion 11, where the five key tops 20 are located. In addition, rectangular hole 13b is formed in the rear corner on the left side of upper surface of exterior case 10, where one key top 20 is located. Hole 13b is formed at a site slightly behind a hole that extends front to back in the L-shape of hole 13a. A rectangular hole 13c is formed at a site slightly to the right of hole 13b, where nine key tops 20 are arranged. Nine key tops 20 arranged in a matrix of three rows and three columns can be freely inserted into hole 13c. Hole 13c is slightly farther back on the right side relative to hole 13a, and the line of the rear opening edge in hole 13a coincides with the line of the rear opening edge in hole 13c. Therefore, the key tops 20 placed in hole 13a and the three key tops placed in the first row of hole 13c have the same alignment.

In addition, hole 13d is formed on the right side area of upper surface portion 11, where jog dial 30 is freely inserted. This hole 13d is formed next to the right front corner on the right side of hole 13c. Furthermore, on the right side of hole 13d in upper surface portion 11, hole 13e is formed for the shaft of the first knob 31 to be freely inserted, and hole 13f is formed for the shaft of the second knob 32 to be freely inserted. Holes 13e and 13f are formed side by side, extending front to back. A long rectangular hole 13g is formed behind hole 13d in upper surface portion 11, where the two key tops 20 are placed side by side. Along rectangular hole 13h is formed in front of hole 13d in upper surface portion 11, where the three key tops 20 are placed side by side. The longitudinal directions of holes 13g and 13h are parallel to the front and rear sides, which are parallel to each other, of the right side areas. In other words, the line of the two key tops 20 in hole 13g is inclined slightly forward and at an angle to the line of the three key tops 20 in the first row in hole 13c. The alignment of the three key tops 20 located in hole 13h is tilted slightly forward and at an angle to the alignment of the three key tops 20 located in hole 13a, which extends left to right in the L-shape of hole 13a.

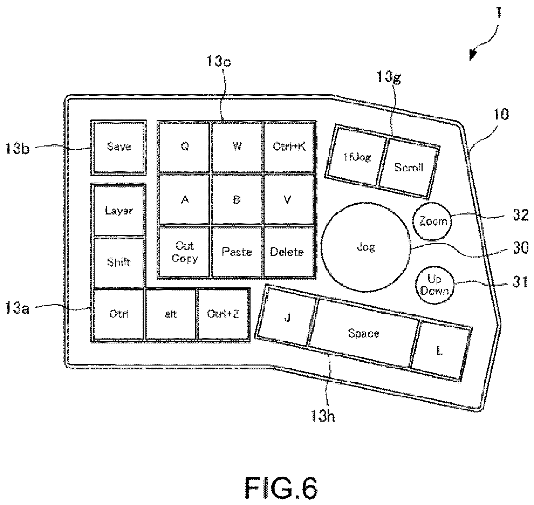

Key top 20 is positioned so as to freely move up and down through a mounting plate 40 (see Fig. 4) on a circuit substrate 41 (see Fig. 4). When the operator presses down on key top 20, the switch on circuit substrate 41 is turned on, and when the operator removes their finger from key top 20, key top 20 moves upward and returns to its original position, turning off the switch on circuit substrate 41. According to this embodiment, key top 20, which is the Space key (see Fig. 6), is longer than the other key tops 20. Key tops 20 other than the Space key are 18 mm square on one side when viewed in plain view, as shown in Fig. 2, and the Space key is approximately twice as long as the other key tops 20. There is a gap of about 1 mm between adjacent key tops 20.

Jog dial 30 is a cylindrical member attached to a rotary axis extending from the rotary encoder. According to this embodiment, the diameter of jog dial 30 is set at 2.7 mm, which is 1.5 times the length of the smaller key top 20. Jog dial 30 has a dish-shaped circular recess 30a on a portion of its outer periphery on the top surface, on which the inner surface of the operator's index finger can be placed. The rotary encoder outputs a signal each time the rotary axis is rotated by a predetermined angle. In this case, the rotary encoder outputs different signals when the rotary shaft is rotated to the left or right. The rotary encoder should be equipped with a mechanism that generates a latching sound or changes the load of jog dial 30 at the time the signal is output.

Jog dial 30 may also be equipped with a mechanism that generates such a latching sound or changes the load of jog dial 30. For example, the outer circumference of jog dial 30 is formed in a cylindrical shape, and the cylindrical inner sides are formed in a gear shaped. The tip of the plate spring element is brought into contact with this internal side. As a result, when jog dial 30 is rotated, the tip of the plate spring element elastically deforms to overcome the gear, thereby applying a rotational load to jog dial 30. Furthermore, when jog dial 30 is rotated and the tip of the plate spring element goes over the gear, the tip of the plate spring element returns to its original position and strikes the internal side of jog dial 30, generating a latching sound and reducing the rotational load.

The first knob 31 and the second knob 32 are cylindrical elements that are longer and narrower than jog dial 30 and attached to a rotary axis extending from the volume element. The first knob 31 and the second knob 32 are identical in shape. The rotary encoder and volume element are mounted on circuit substrate 41.

Circuit substrate 41 is fixed below mounting plate 40, where a plurality of key tops 20 are arranged on the board surface, so that the switches and key tops 20 face each other. Mounting plate 40 has holes in which the rotary axes extending from the rotary encoder and volume element are inserted freely, respectively, and the rotary axes extending from the rotary encoder and volume element protrude from these holes. Mounting plate 40, on which circuit substrate 41 is fixed, is inserted from the bottom of exterior case 10 and fixed inside exterior case 10. At this time, circuit substrate 41 and mounting plate 40 are positioned parallel to upper surface portion 11 of exterior case 10.

As shown in Fig. 1, this causes a plurality of key tops 20 to protrude from holes 13a-13c and holes 13g and 13h. In addition, the rotary axis of the rotary encoder protrudes through hole 13d, and the rotary axis of the two volume elements protrudes through holes 13e and 13f. Jog dial 30 is then attached to the end of the rotary axis protruding from hole 13d and fitted loosely into hole 13d. The first knob 31 and the second knob 32 are attached to the tips of the rotary axis protruding from holes 13e and 13f and are positioned on upper surface portion 11. Finally, the lower part of exterior case 10 is covered by lid 15 (see Fig. 4) to form one-handed input device 1.

In addition, circuit substrate 41 is preferably provided with a controller capable of executing a program (also referred to as firmware) to control circuit substrate 41, and a storage medium such as read-only memory and/or flash memory capable of storing the firmware.

This allows circuit substrate 41 to be configured so that advanced signal generation processing, and the like, can be realized. The advanced signal generation process is, for example, the generation of signals corresponding to the operation of a plurality of key tops 20, jog dial 30, first knob 31, and second knob 32.

The storage medium should preferably include a medium that can be rewritten from personal computer 101, such as flash memory. This allows the firmware to be rewritten without the labor of removing circuit substrate 41 from exterior case 10 and replacing the storage medium on circuit substrate 41. Therefore, the configuration of storing firmware in a storage medium, including a rewritable medium, can facilitate responses to firmware defects, functional improvements by rewriting the firmware, and so on.

Although not illustrated, a connector is located on the side of one-handed input device 1 to connect personal computer 101 to one-handed input device 1 via a cable or wireless device. Signals generated by the operation of one-handed input device 1 by the operator are sent from one-handed input device 1 to personal computer 101 via a connector.

### [Assign a function to each key]

One-handed input device 1 in this embodiment has 20 pieces of key tops 20, as shown in Fig. 2. Each of the key tops 20 is associated with a character or function to be input.

Fig. 6 shows an example of the functions associated with each of the key tops 20 of one-handed input device 1.

In L-shaped hole 13a, the Layer, Shift, and Ctrl keys are arranged in order from the upper left to the lower left, and the Alt and Ctrl+Z keys are further arranged in order to the right. The Save key is located in hole 13b. Hole 13c has the Q, W, and Ctrl+K keys in the first row, the A, B, and V keys in the second row, and the CutCopy, Paste, and Delete keys in the third row. The 1FlameJog and Scroll keys are located in hole 13g. The J, Space, and L keys are located in hole 13h.

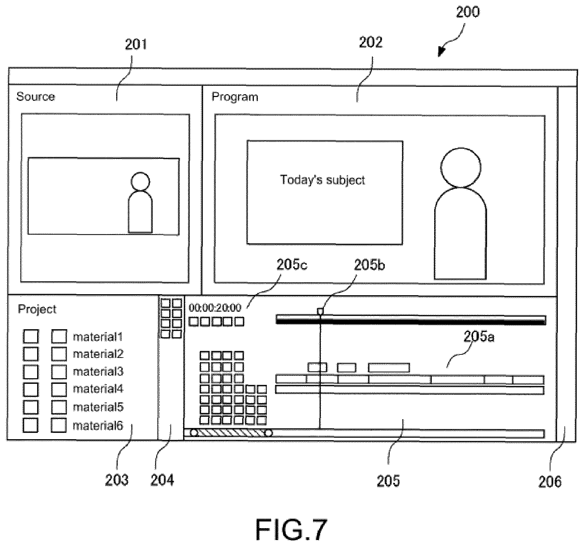

Jog dial 30 moves playhead 205b (see Fig. 7) and others according to the amount of rotation. The first knob 31 adjusts the volume according to the amount of rotation (resistance of the volume). The second knob 32 expands and contracts the screen according to the amount of rotation (resistance of the volume). The key names shown in Fig. 6 may be used to designate individual key tops in the 20 pieces of key tops 20 of one-handed input device 1 in this embodiment.

Figs. 4 and 5 show the upper surface of exterior case 10 viewed horizontally. As shown in Fig. 4, the top surfaces of the Layer, Shift, and Ctrl keys in hole 13a are slightly inclined downward from the front to the rear, with the top surface of the Ctrl key being inclined more than that of the Shift and Layer keys. The upper surface of the Save key in hole 13b is inclined slightly downward from the rear to the front. The upper surfaces of the nine keys of hole 13c are inclined slightly downward from front to back. The upper surfaces of the 1FlameJog key and the Scroll key in the 13g hole are slightly inclined downward from the rear to the front. As shown in Fig. 4, the upper surfaces of the J, Space, and L keys in hole 13h are slightly inclined downward from the rear to the front. The Save key in hole 13b and the 1FlameJog and Scroll keys in hole 13g are set slightly higher from the upper surface of exterior case 10 than the other keys.

The height of jog dial 30 from the upper surface of exterior case 10 is set at approximately the same height as the height of the protrusion from the upper surface of exterior case 10 at key top 20 located in holes 13a and 13c. Specifically, the upper surfaces of key tops 20 located in holes 13a and 13c are inclined, and the upper surface of jog dial 30 is located within the slope of key top 20 when viewed from the side, as shown in Fig. 4. The first knob 31 and the second knob 32 are at the same height, and the first knob 31 and the second knob 32 are set higher than all the keys.

Jog dial 30 is operated primarily by the index finger of the operator's left hand. The Layer, Shift, Ctrl, Alt, Ctrl+Z, Save, Q, W, Ctrl+K, A, B, V, CutCopy, Paste, and Delete keys, which are located to the left of jog dial 30, are mainly operated by fingers other than the operator's left thumb. In addition, these keys are located within the range in which jog dial 30 can be operated by the index finger of the left hand while being pressed by the operator's left middle, ring, and little fingers.

The 1FlameJog and Scroll keys, which are located behind jog dial 30, are operated mainly by the operator's left index finger. The J, Space, and L keys, which are located in front of jog dial 30, are operated mainly by the operator's left thumb. Both the first knob 31 and the second knob 32 are rotated and operated by the operator's left thumb and index finger.

When one-handed input device 1 is placed on a horizontal surface on a desk, the upper surface of exterior case 10 is inclined slightly downward from the right to the left and slightly downward from the rear to the front, as shown in Fig. 1. In other words, the upper surface of one-handed input device 1 is inclined from the right rear to the left front, and mounting plate 40 and circuit substrate 41 in exterior case 10 are also inclined. Thus, for example, when jog dial 30 is rotated by the index finger while the Ctrl key is pressed with the little finger, the position of the little finger is lower than that of the index finger because the Ctrl key is lower than jog dial 30. This allows the operator to operate one-handed input device 1 in a relatively comfortable position, with the left elbow down.

### [Video Editing Screen]

Fig. 7 is a drawing showing an example of a video editing screen. Video editing screen 200 appears on the display of personal computer 101 (see Fig. 1) and includes source monitor 201, program monitor 202, project panel 203, tool panel 204, timeline panel 205, and audio meter 206.

Source monitor 201 is a monitor for checking the material. Program monitor 202 displays the video being edited on timeline panel 205. Timeline panel 205 displays sequence 205a, which arranges the material side by side; playhead 205b, which moves along the time axis; time 205c at the position of playhead 205b; and the like. Here, the time axis is shown as extending from left to right, so the material is aligned from left to right, and playhead 205b moves from left to right. Project panel 203 displays file names and icons for material video, images, captions, music, audio, and the like.

Tool panel 204 displays icons for various tools for video editing. Timeline panel 205 is the main panel for video editing, where video, still images, captions, music, audio, and the like are arranged in sequence 205a. Audio meter 206 displays the audio volume.

When editing video, the operator first stores the video, images, captions, and other materials on project panel 203. When a worker specifies a file name, icon, and the like, displayed on project panel 203 with mouse 102, source monitor 201 displays a movie of the material, and the like. The operator can specify the range for editing in source monitor 201 and place it in sequence 205a of timeline panel 205.

The operator performs editing operations, such as cutting unnecessary portions of the material placed in sequence 205a in the timeline panel 205, changing the placement of the material, adding captions and music at predetermined times, and adjusting the volume of the audio.

The material placed in sequence 205a can be played by specifying the playback icon with mouse 102 or by pressing the Space key. The playback image is displayed on program monitor 202. During playback, playhead 205b moves to the right. The operator decides on the range to be cut, when to add a message or music, when to add effects, and the like, by referring to the position and time of playhead 205b, and proceeds with the editing process by operating input devices such as mouse 102, the keyboard, and one-handed input device 1.

In one-handed input device 1, jog dial 30 is assigned the function of moving the image one frame at a time. Specifically, the operator can operate jog dial 30 of one-handed input device 1 while the image on program monitor 202 is stopped to move playhead 205b and move the image on program monitor 202 back and forth, frame by frame. According to this embodiment, jog dial 30 has the function of generating a latching sound when it is rotated at a certain angle, and the image is set to move one frame each time a latching sound is generated. This allows the operator to refer to the latch sound when proceeding with the video editing process.

On one-handed input device 1, the following functions are assigned: the Ctrl+Z key to undo, the Q key to ripple trim the previous edit point to the playback head, the W key to ripple trim the next edit point to the playback head, the Ctrl+K key to split, the A key to switch to the track selection tool, the B key to switch to the ripple tool, the V key to switch to the selection tool, the J key to fast forward, the Space key to play/stop, and the L key to rewind.

The function of each key on one-handed input device 1 can be set by the operator as required. In particular, this form of one-handed input device 1 allows the operator to operate jog dial 30 with the index finger while pressing keys with the middle, ring, and little fingers. Therefore, it is possible to assign multiple functions to jog dial 30. For example, it is possible to assign the Ctrl key + jog dial 30 to move the image by multiple frames, to zoom in or out sequence 205a displayed on timeline panel 205, or to assign the Ctrl key + Alt key + jog dial 30 to switch the sequence to be edited. This is only one example; other functions can be assigned.

### [Working Effects]

According to this embodiment, configured as described above, with the index finger in contact with the upper surface of jog dial 30, key tops 20 located in holes 13a-13c can be operated by the middle, ring, or little fingers, and the left hand can place the finger on the desired key top 20 and jog dial 30. This makes it possible to operate keys without looking at the left hand, to alternate between jog dial 30 and the keys, or to operate jog dial 30 while pressing a key. The range in video editing can easily be specified by using jog dial 30 to move playhead 205b left and right to determine the start and end points.

Furthermore, by operating jog dial 30 while pressing other keys, it is possible to easily zoom in and out of the screen. Thus, in addition to the operation of jog dial 30 alone, pressing a predetermined key when operating jog dial 30 enables jog dial 30 to have multiple functions, which further improves work efficiency in video editing. Moreover, in this embodiment, there are many different combinations of jog dial 30 and keys that can be pressed. For example, combinations of Ctrl key + Alt key + jog dial 30, Ctrl key + CutCopy key + jog dial 30, or Ctrl key + CutCopy key + Paste key + jog dial 30 would be possible. Here, Ctrl key + CutCopy key + jog dial 30 is easier to use with the little, ring, and index fingers than Ctrl key + Alt key + jog dial 30, so functions that are used more frequently could be assigned to Ctrl key + CutCopy key + jog dial 30. Thus, it is possible to select other keys to facilitate the operation of jog dial 30.

According to this embodiment, each time jog dial 30 is rotated by a predetermined angle, a latching sound is generated or its rotational load is changed so that it is possible to hear the latching sound and feel the clicking sensation caused by the change in rotational load when operating jog dial 30 and rotate jog dial 30 at a predetermined angle. This makes it possible to move images back and forth easily by one or a few frames, for example, in video editing, facilitating editing operations that require minute manipulations.

According to this embodiment, the upper surface of a predetermined number of key tops 20 and the upper surface of jog dial 30 are at substantially the same height, so that it is possible to place the index finger on the upper surface of jog dial 30 and the middle, ring, and little fingers on the upper surface of key tops 20 without discomfort. This makes it easy to operate the keys and jog dial 30 without looking at the left hand, further improving work efficiency in video editing.

According to this embodiment, knobs 31 and 32 are located near jog dial 30, which is operated with the index finger, making it easier to hold knobs 31 and 32 with the thumb and index finger. This makes it possible to add additional editing functions using knobs 31 and 32, further improving work efficiency in video editing.

According to this embodiment, when one-handed input device 1 is placed on a horizontal surface on a desk, the upper surface of exterior case 10 is inclined from the right rear to the left front. Thus, keys that are pressed by the little finger, such as the Ctrl key, are slightly lower than jog dial 30, which is operated by the index finger. This allows the operator to operate one-handed input device 1 with the left elbow down and in a relatively comfortable position.

In the aforementioned embodiments of the present invention, one-handed input device 1 for the left hand is described, but the embodiments of the present invention do not exclude one-handed input device 1 for the right hand. One-handed input device 1 for the right hand comprises a mirror transformation of one-handed input device 1 in Fig. 2 to the left and right. Jog dial 30 is primarily operated by the index finger of the operator's right hand. The Layer, Shift, Ctrl, Alt, Ctrl+Z, Save, Q, W, Ctrl+K, A, B, V, CutCopy, Paste, and Delete keys, which are located to the right of jog dial 30, are primarily operated by fingers other than the operator's right thumb. These keys are located within the range in which jog dial 30 can be operated by the right index finger while being pressed by the middle, ring, and little fingers of the operator's right hand. This allows an operator who operates mouse 102 with the left hand to operate the one-handed input device with the right hand.

The embodiment of the present invention has been described with the example of a combination of operating one-handed input device 1 with the left hand and mouse 102 with the right hand, but the input device operated with the right hand is not limited to mouse 102 and can be other pointing devices, such as track balls, touch panels, liquid crystal tablets, and the like.

In the embodiment of the present invention, the first knob 31 and the second knob 32 are operated by rotation, but other switch functions may also be provided by a push-in operation. Furthermore, a switch function may be provided by a lever operation that collapses the first knob 31 and the second knob 32. This makes it possible to add new functions based on the operation of the first and second knobs 31 and 32, thereby improving work efficiency in video editing.

The aforementioned embodiments of the present invention are described using the case of video editing with Adobe's "Premiere Pro" video editing software as an example, but it is also possible to assign functions to each key and jog dial to apply to other video editing software, image editing software, and even music editing software. For example, it can be used for image editing software, such as Adobe's "Illustrator," and jog dial 30 can be used to enlarge or reduce the drawing area. The following is a list of examples of existing applications to which the embodiment of the invention can be applied.
- "Adobe Premiere Pro," Adobe's video editing software
- "Adobe After Effects," Adobe's video editing software
- "Adobe Illustrator," Adobe's image editing software
- "Adobe Photoshop," Adobe's image editing software
- "Blender," 3D computer graphics software developed by the non-profit Blender Foundation
- "OBS," free and open source streaming recording software
- "KiCad," open-source electronic design automation (EDA) software
- "Figma," design tool from Figma, Inc.
- "DaVinci Resolve," Blackmagic Design's integrated post-production software
- "Unity," a game engine provided by Unity Technologies, Inc.
- "UE5," a game engine developed by Epic Games
- "Adobe XD," a design tool from Adobe Inc.
- "Adobe Lightroom," Adobe's photo editing software
- "Capture One," photo editing software from Phase One, Inc.
- "CLIP STUDIO," Celsys' painting software and manga manuscript production software
- "Studio One 5," music editing software from PreSonus
- "Fusion 360," AUTODESK's integrated CAD/CAM/PCB software
- "Paint Tool SAI," paint software by SYSTEMAX, Inc.
- "Live2D," visual expression and related software from Live2D, Inc.

It is understood that within the scope of the present invention, one skilled in the art can conceive of various changes and modifications, and that these changes and modifications also fall within the scope of the present invention. For example, additions, deletions, or design changes of components, or additions, omissions, or changes of conditions of processes made by a person skilled in the art to the aforementioned embodiments, as appropriate, are also included in the scope of the invention, as long as they provide the gist of the invention.

### DESCRIPTION OF REFERENCE NUMERALS

- 1: One-handed input device
- 10: Exterior case
- 11: Upper surface portion
- 12: Side surface portion
- 13: Hole
- 20: Key top
- 30: Jog dial
- 31: First knob
- 32: Second knob
- 40: Mounting plate
- 41: Circuit substrate
- 100: Image editing device
- 101: Personal computer
- 102: Mouse
- 200: Video editing screen
- 201: Source monitor
- 202: Program monitor
- 203: Project panel
- 204: Tool panel
- 205: Timeline panel
- 205a: Sequence
- 206: Audio meter
- 206a: Sequence
- 206b: Playhead
- 206c: Duration

## Claims

1. A one-handed input device comprising:
a substrate having a plurality of switch elements and a rotation detecting element that generates signals based on a rotation angle of a rotation axis;
a plurality of key tops that are positioned above the substrate and freely pressed toward the plurality of switch elements; and
a jog dial that is positioned above the substrate and rotates the rotation axis,
wherein the jog dial is capable of rotary operation by contacting an inner surface of a finger with an upper surface thereof, and
a predetermined number of key tops among the plurality of key tops being operable by a middle, ring, or little finger while maintaining an index finger in contact with an upper face of the jog dial and being positioned so as to enable a rotary operation of the jog dial by an index finger while maintaining a pressed state with a middle, ring, or little finger.

2. The one-handed input device according to claim 1, wherein the jog dial performs at least one of generating a mechanical sound or changing a rotational load, each time it is rotated by a predetermined angle.

3. The one-handed input device according to claims 1 or 2, wherein a height from a board surface of the substrate to an upper surface of the predetermined number of key tops is substantially the same as a height from a board surface of the substrate to an upper surface of the jog dial.

4. The one-handed input device according to any one of claims 1 to 3, wherein a knob is positioned on a side opposite to where the predetermined number of key tops are located with respect to the jog dial, is capable of being operated by a thumb and an index finger.

5. The one-handed input device according to any one of claims 1 to 4, wherein the predetermined number of key tops are positioned so as to be capable of operation by one of a middle, ring, or little finger of a left hand, with an index finger of a left hand in contact with the jog dial.

6. The one-handed input device according to any one of claims 1 to 4, wherein the predetermined number of key tops are positioned so as to be capable of operation by one of a middle, ring, or little finger of a right hand, with an index finger of a right hand in contact with the jog dial.
